# EUROPÄISCHE PATENTSCHRIFT

(11) **EP 2 636 933 B1**
(45) Veröffentlichungstag und Bekanntmachung des Hinweises auf die Patenterteilung: **30.04.2014**
(21) Anmeldenummer: 12158270.4
(22) Anmeldetag: 06.03.2012
(51) Int. Cl.: F16K 11/22, F16K 27/00

(54) **Modular aufgebauter Flüssigkeitsverteiler**
Modular fluid distributor
Distributeur de liquide installé de manière modulaire

(43) Veröffentlichungstag der Anmeldung: 11.09.2013
(73) Patentinhaber: AFRISO-Euro-Index GmbH, 74363 Güglingen (DE)
(72) Erfinder: Frey, Markus, 75031 Eppingen (DE); Gerlach, Axel, 75031 Eppingen-Kleingartach (DE); v. Olnhausen, 75031 Eppingen- Kleingartach (DE)
(74) Vertreter: Kohler Schmid Möbus

(56) Entgegenhaltungen:
- DE-A1-102005 008 833
- US-A1- 2006 157 131
- US-A1- 2009 090 415
- US-B1- 6 805 150

## Beschreibung

Die vorliegende Erfindung betrifft einen Flüssigkeitsverteiler, insbesondere einen Sole-Verteiler für Geothermieanlagen.

Mit der zunehmenden Bedeutung von energieeinsparenden Maßnahmen zur Gebäudebeheizung gewinnt auch die Geothermie an Bedeutung. Stand der Technik für Großanlagen sind Flüssigkeitsverteiler, welche aus extrudierten Rohren mit entsprechend aufwendiger Nacharbeit hergestellt werden. Bei solchen Verteilern werden dickwandige Rohre auf die benötigte Länge abgeschnitten, Bohrungen für die Sondenkreise (Solekreise) eingebracht und die entsprechenden Anschlussstutzen an jeden Sondenkreis angeschweißt bzw. angebracht. Die notwendigen Absperr- und Regelventile, sowie die Durchflussanzeigen werden als nachgeschaltete Ventile an einen solchen Verteiler montiert. Vorteil dieses Verfahrens ist es, dass die gängigen Abstandsmaße für die Sondenabgänge problemlos realisiert werden können. Nachteilig ist jedoch der hohe Zeit- und Kostenaufwand, da jeder Flüssigkeitsverteiler eine Einzelfertigung darstellt und in der Regel auch auftragsbezogen hergestellt wird. Dadurch sind längere Lieferzeiten unvermeidbar. Mit zunehmender Anzahl an Sondenkreisen können die Verteiler bis zu mehrere Meter lang werden und führen zu Transport- und Lagerungsproblemen.

Bei kleineren Geothermieanlagen werden teilweise industriell gefertigte Flüssigkeitsverteiler aus Kunststoff verwendet. Aus DE 10 2005 008 833 A1 ist ein solcher Verteiler bekannt, wo einzelne Verteilersegmente hergestellt, mit End- und Anschlussstücken versehen und durch Zugstangen zusammenmontiert werden. Auch aus WO 99/001701 A1 ist ein Verteiler bekannt, bei welchem die einzelnen Verteilersegmente über ein integriertes Spezialgewinde miteinander verbunden werden. Verteiler nach diesen beiden Systemen sind für die Anforderungen in der Geothermie allerdings nur bedingt geeignet, da die Strömungsquerschnitte des Verteilers und der Ventile nicht ausreichend dimensioniert bzw. dimensionierbar sind. Grund sind die bis mittig in den Strömungsquerschnitt des Verteilers hineinreichenden Ventile.

Aus US 2009/0090415 A1 ist ein Flüssigkeitsverteiler gemäß dem Oberbegriff von Anspruch 1 bekannt.

Es die Aufgabe der vorliegenden Erfindung, einen modular aufgebauten Flüssigkeitsverteiler anzugeben, der möglichst einfach aufgebaut und leicht zusammen gefügt werden kann.

Diese Aufgabe wird erfindungsgemäß durch einen Flüssigkeitsverteiler gemäß Anspruch 1 gelöst.

Aufgrund des erfindungsgemäßen modularen Aufbaus ist es möglich, entsprechende Verteilerbausätze industriell vorzufertigen, so dass an der Baustelle nur noch die endgültige Anpassung entsprechend der örtlichen Begebenheiten durchgeführt werden muss. Dies bedeutet, dass die notwendigen Module miteinander verbunden werden und die Endmontage des Verteilers an der Baustelle durchgeführt wird.

Durch den modularen Aufbau ist es möglich, werksseitig bestimmte Fixlängen des Verteilers herzustellen (z. B. Stränge mit 6 Solekreisen), damit die Endmontage bauseits zügig erfolgen kann. So werden beispielsweise für einen Verteiler mit 14 Solekreisen 2 Modulstränge mit je 6 Solekreisen, sowie 2 Einzelmodule miteinander an der Baustelle gefügt. Sämtliche Bauteile können dabei auf handelsüblichen Europaletten gelagert und transportiert werden. Durch den modularen Aufbau ist eine lagermäßige Bevorratung der modularen Komponenten für die Endkonfektionierung von Verteilern beim Handel oder bei den Fachbetrieben problemlos möglich.

Der erfindungsgemäße modulare Flüssigkeitsverteiler hat insbesondere folgende Vorteile:
- Modularität
- Industriell vorgefertigt und auf Dichtheit geprüft.
- Kurzfristig verfügbar, da individuell zusammenstellbar
- Sondenabgänge beliebig positionierbar (in der Verteilerachse um 0-360° drehbar sowie wendbar)
- Realisierung von minimalen Sondenabständen
- Verschiedene Sondenabstände über Distanzstücke realisierbar
- Verteiler lässt sich über Eck montieren und in eine annähernd runde Form bringen
- Identische Sondenabstände auch bei gedrehten Abgängen
- Integrierte Durchflussregelventile mit großen Kvs-Werten
- Freier Strömungsquerschnitt durch tangential angebundene Ventiltechnik, d.h. keine Querschnittsverengung durch Ventile, welche üblicherweise im Mittenbereich des Verteilers stehen. Dadurch wird ein hoher Volumenstrom möglich bzw. ein großer Kvs-Wert erreicht.
- Integrierte Durchflussanzeige
- Integrierbare Messblenden für hydraulischen Abgleich
- Integrierbare Temperaturanzeige
- Modulares Stecksystem für Sondenanschlüsse, bei welchem mit einem Verteiler über die Wahl eines Rohradapters verschiedene Sondenrohre angeschlossen werden können.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale je für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fign. 1a-1c: einen im Zulauf eines Solekreises angeordneten, oberen erfindungsgemäßen Sole-Verteiler und einen im Rücklauf des Solekreises angeordneten, unteren erfindungsgemäßen Sole-Verteiler mit jeweils drei Verteilermodulen in einer perspektivischen Ansicht (Fig. 1a), in einer Frontansicht (Fig. 1 b) und in einer Längsschnittansicht (Fig. 1c) gemäß der Schnittlinie Ic-Ic in Fig. 1 b;
- Fign. 2a-2c: mögliche Rastermaße im Fall von gleich breiten Verteilermodulen (Fig. 2a), im Fall von zwei unterschiedlichen breiten Verteilermodulen (Fig. 2b) und im Fall von zwei unterschiedlichen breiten Verteilermodulen und Distanzmodulen (Fig. 2c);
- Fig. 3: einen erfindungsgemäßen Sole-Verteiler mit vier Verteilermodulen, von denen einer gegenüber den anderen Verteilermodulen gewendet ist;
- Fig. 4: einen erfindungsgemäßen Sole-Verteiler mit sechs über Eck angeordneten Verteilermodulen;
- Fign. 5a, 5b: ein Verteilermodul mit vollständig geöffnetem Ventil (Fig. 5a) und mit geschlossenem Ventil (Fig. 5b), jeweils in einem Längsschnitt;
- Fig. 6: ein Verteilermodul mit Anschlüssen für einen hydraulischen Durchflussabgleich; und
- Fign. 7a, 7b: eine perspektivische Ansicht des in Fign. 5 und 6 gezeigten Modulgehäuses mit einem axial verschiebbaren Anschlagring in seiner drehfixierten vorderen Stellung (Fig. 7a) und in seiner verdrehbaren hinteren Stellung (Fig. 7b).

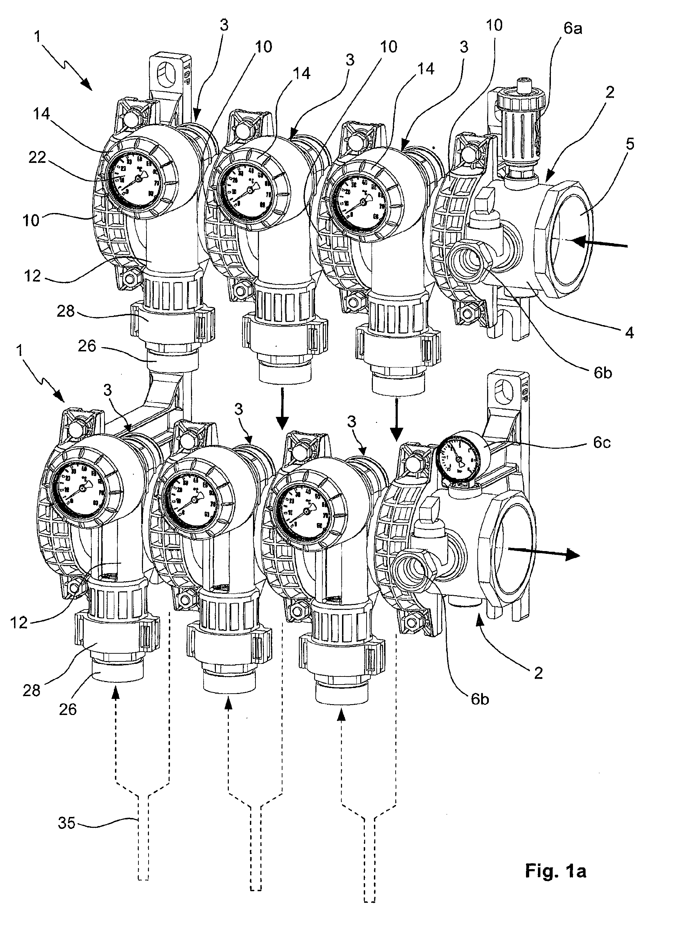

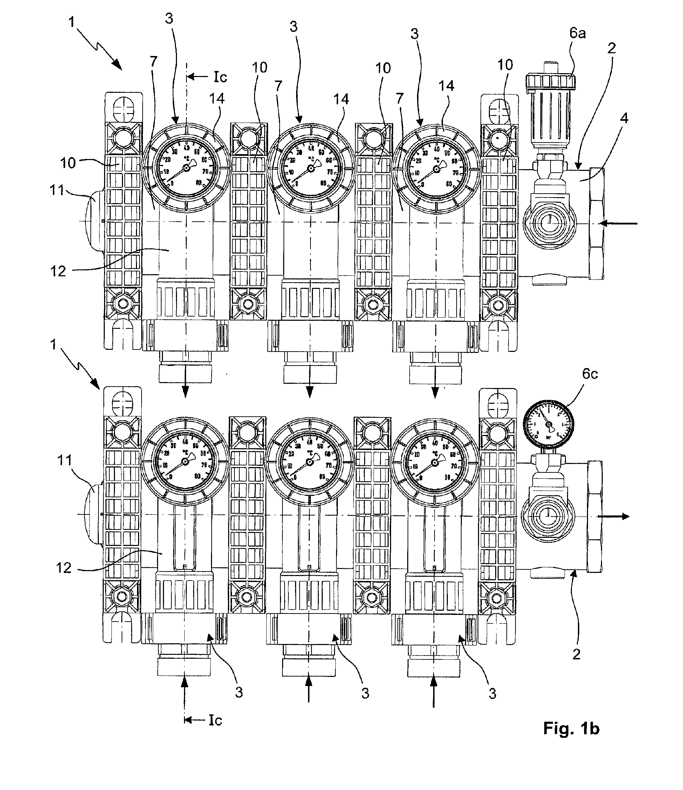

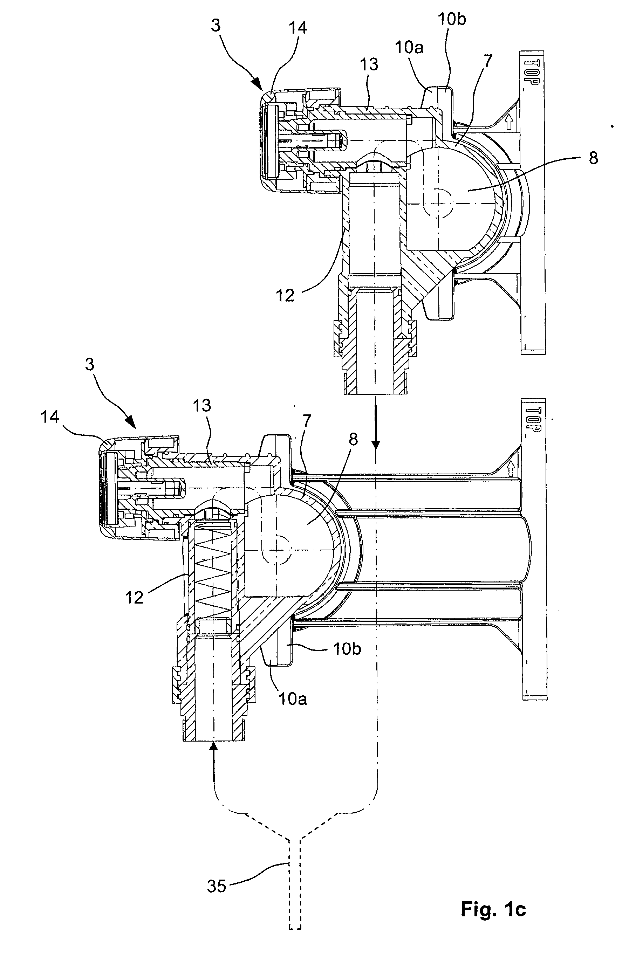

In **Fign. 1a-1c** sind zwei baugleiche Sole-Verteiler **1** einer Geothermieanlage gezeigt, von denen der obere im Zulauf und der untere im Rücklauf der Solekreise **35** angeordnet sind. Die Sole-Verteiler 1 sind jeweils aus vier in Reihe hintereinander angeordneten, jeweils miteinander lösbar verbundenen Module **2, 3** zusammengesetzt, nämlich, in Fig. 1 von rechts nach links, aus einem Anschlussmodul 2 zum Anschließen an einen Verteilerzulauf oder -ablauf und aus drei Verteilermodulen 3.

Das Anschlussmodul 2 weist ein einteiliges Modulgehäuse **4** aus Kunststoff mit einem Hauptleitungsabschnitt **5** auf, der an einem Ende von einem kreisringförmigen Anschlussflansch (nicht gezeigt) umgeben ist. Außerdem ist das Anschlussmodul 2 mit den notwendigen Armaturen **6a-6c** zur Befüllung, Duckanzeige, Entlüftung und Spülung versehen. Bei den Solekreisen 35 kann es sich beispielsweise um Erdsonden, welche bis zu 100m in die Tiefe gehen, um Flächenkollektoren, welche in einer Tiefe von 1-2m vorgesehen sind, oder um Sondenkörbe, welche wie eine Spirale gewickelt und in einer Tiefe von 1-2m vorgesehen sind, handeln.

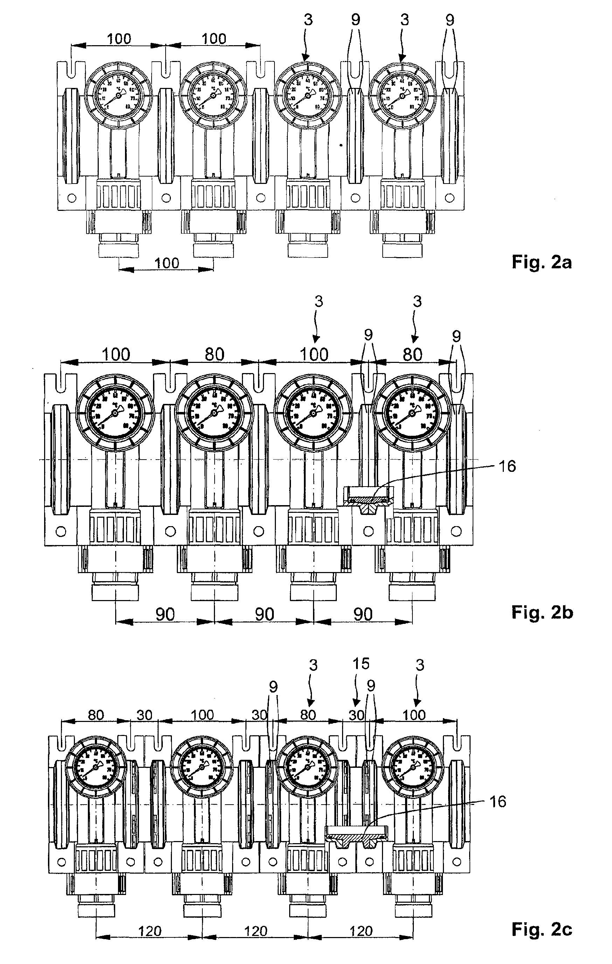

Die Verteilermodule 3 sind baugleich und weisen ein einteiliges Modulgehäuse **7** aus Kunststoff mit einem Hauptleitungsabschnitt **8** (Fig. 1 c) auf, der an seinen beiden Enden von einem kreisringförmigen Anschlussflansch **9** (Fig. 2) umgeben ist. Benachbarte Module 2, 3 liegen mit ihren Anschlussflanschen 9 aneinander an, die jeweils über Rohrschellen **10** miteinander kraftschlüssig verspannt sind. Die Hauptleitungsabschnitte 5, 8 der Module 2, 3 bilden eine durchgehende Hauptleitung im Sole-Verteiler 1 aus. Der Hauptleitungsabschnitt 8 des in Fig. 1 linken Verteilermoduls 3 ist mit einem Blindflansch **11** (Fig. 1 b) verschlossen, der am Anschlussflansch 9 des Verteilermoduls 3 ebenfalls über eine Rohrschelle 10 verspannt ist. Wie unten noch im Detail beschrieben, geht von dem Hauptleitungsabschnitt 8 der Verteilermodule 3 jeweils ein Abzweigrohr **12** eines Solekreises 35 ab. Zwischen Hauptleitungsabschnitt 8 und Abzweigrohr 12 ist ein Ventil **13** mit einem Handrad **14** zum Absperren und Regeln der Durchflussmenge angeordnet.

Wie in Fig. 1 mit Strömungspfeilen angedeutet, strömt das Wasser zentral in den oberen Sole-Verteiler 1 über das Anschlussmodul 2 ein und weiter in die drei Verteilermodule 3, die das Wasser über ihre Abzweigrohre 12 auf die einzelnen Solekreise 35 aufteilen. Das Wasser aus den einzelnen Solekreisen 35 strömt über die Abzweigrohre 12 in die drei Verteilermodule 3 des unteren Sole-Verteilers 1 ein und von dort zentral aus dem Anschlussmodul 2 des unteren Sole-Verteilers 1 aus.

Wie in Fig. 1c gezeigt, ist die Rohrschelle durch zwei Schellenhälften **10a, 10b** gebildet, von denen die hintere Schellenhälfte 10b gleichzeitig als Wandhalter ausgebildet ist. In Fig. 1c ist auch gezeigt, dass die Abzeigrohre 12 beim oberen Sole-Verteiler 1 jeweils integral durch ein Rohrstück des Modulgehäuses 7 und beim unteren Sole-Verteiler 1 jeweils durch einen abgedichteten separaten Rohreinsatz gebildet sind.

**Fig. 2a-2c** zeigen die möglichen Rastermaße im Fall von 100mm breiten Verteilermodulen 3 (Fig. 2a), im Fall von zwei 80mm und 100mm breiten Verteilermodulen 3 sowie im Fall von zwei 80mm und 100mm breiten Verteilermodulen 3 und zusätzlichen 30mm breiten Distanzmodulen **15** aus Kunststoff. Im letzteren Fall können beispielsweise insgesamt 6 Abstandsmaße (80 / 90 / 100 / 110 / 120 / 130 mm) realisiert werden. Die Distanzmodule 13 weisen jeweils einen Hauptleitungsabschnitt (nicht gezeigt) mit zwei endseitig vorgesehenen kreisringförmigen Anschlussflanschen 9 auf, die über Rohrschellen 10 mit den Anschlussflanschen der Verteilermodule 3 verbunden werden. Wie in Fign. 2b, 2c gezeigt, sind benachbarte Module 3, 13 durch eine in ihre Hauptleitungsabschnitte 8 eingesetzte Zwischen- oder Distanzhülse **16** abgedichtet.

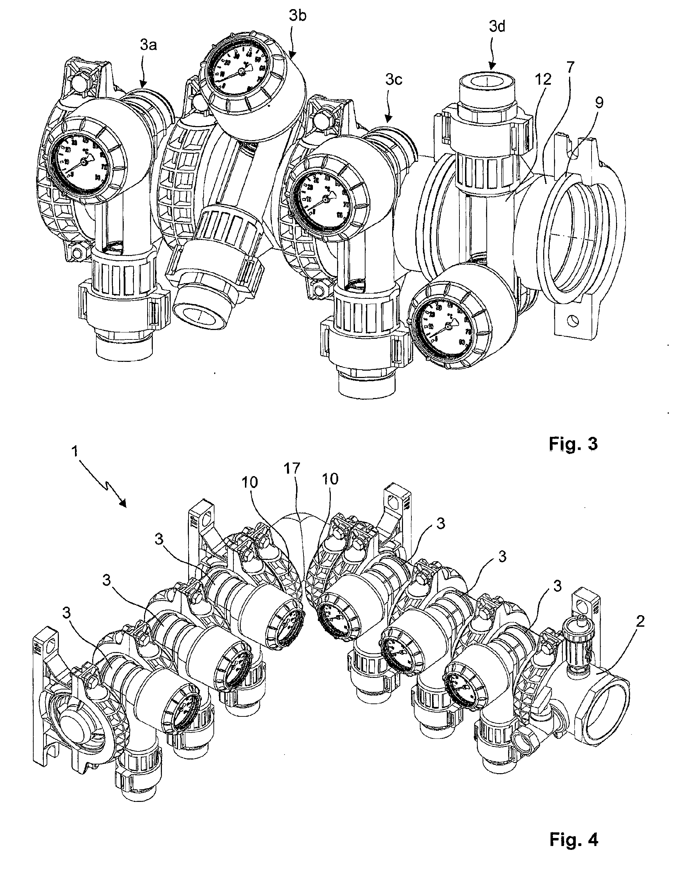

Durch die kreisringförmigen Anschlussflansche 9 ist es möglich, einzelne Verteilermodule 3 in die gewünschte Anschlussrichtung der Sonde zu drehen. **Fig. 3** zeigt vier baugleiche Verteilermodule 3a-3d, von denen das zweitlinke Verteilermodul 3b gegenüber seinen beiden benachbarten Verteilermodulen 3a, 3c um ca. 45° um die horizontale Modulachse verdreht ist. Das rechte Verteilermodul 3d ist gewendet, also um 180° um die vertikale Modulachse gedreht, angeordnet und mit seinem Abzweigrohr 12 nach oben ausgerichtet, damit das Handrad 14 wieder nach vorne zeigt.

**Fig. 4** zeigt einen Sole-Verteiler 1 mit einem Anschlussmodul 2 und mit sechs Verteilermodulen 3, die über ein 90°-Winkelmodul **17** aus Kunststoff über Eck angeordnet sind. Das Winkelmodul 17 weist einen Hauptleitungsabschnitt mit zwei endseitig vorgesehenen kreisringförmigen Anschlussflanschen auf, die mit den Anschlussflanschen 9 der Verteiler- oder Distanzmodule 3, 15 über Rohrschellen 10 verbunden sind. Mehrere solche Winkelmodule 17 ermöglichen zum Beispiel einen Sole-Verteiler in einer U-Form, der in einen runden Sole-Schacht eingebracht und befestigt werden kann.

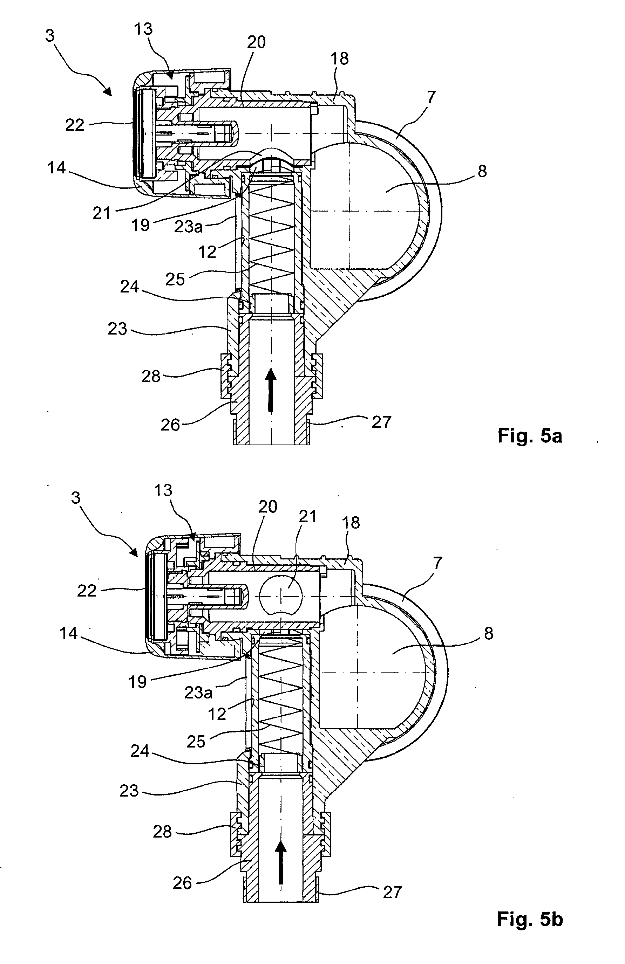

Wie in **Fign. 5a, 5b** gezeigt, steht am Modulgehäuse 7 des Verteilermoduls 3 ein rohrförmiger Ventilstutzen **18** nach außen ab, der vom Hauptleitungsabschnitt 8 mantelseitig abgeht und eine Seitenöffnung **19** aufweist. Im Ventilstutzen 18 ist ein Ventilkörper in Form eines zum Hauptleitungsabschnitt 8 hin offenen Hohlzylinders **20** von außen eingesetzt und darin drehbar gelagert, der mantelseitig eine Ventilöffnung **21** zum Verschließen oder Freigeben der Seitenöffnung 19 des Ventilstutzens 18 aufweist und über das Handrad 14 gedreht wird. Für eine verbesserte Abdichtwirkung kann der Hohlzylinder 20 außenseitig mit einer zweiten weicheren Kunststoffkomponente ausgeführt sein. Dadurch kann das Ventil 13 über etwa eine ½ Umdrehung voll geöffnet bzw. entsprechend auf eine Zwischenstellung einreguliert werden. Das Ventil 13 ist in Fig. 5a im vollständig geöffneten Zustand und in Fig. 5b im geschlossenen Zustand gezeigt. Das Ventil 13 greift nicht in den Hauptleitungsabschnitt 8 ein, sondern ist seitlich am Modulgehäuse 7 integriert, damit ein größtmöglicher Strömungsquerschnitt im Hauptleitungsabschnitt 8 erhalten bleibt und der damit verbundene Druckverlust gering bleibt. In das Handrad 14 des Ventils 13 ist ein Thermometer **22** eingebaut, das die entsprechende Soletemperatur anzeigt.

An die Seitenöffnung 19 des Ventilstutzens 18 schließt sich das Abzweigrohr 12 in Form eines separaten Rohreinsatzes an, der in einen außenseitigen Steckstutzen **23** des Modulgehäuses 7 eingesteckt ist. Das Abzweigrohr 12 ist als Durchflussmesser mit einer verschiebbar geführten Hülse **24** ausgebildet, die durch die in Pfeilrichtung hindurchströmende Flüssigkeit gegen die Feder **25** verschoben wird und von außen durch die transparente Rohrwand des Rohreinsatzes und einen Schlitz **23a** des Steckstutzens 23 sichtbar ist. Zur Montage des eigentlichen Sondenrohrs (nicht gezeigt) ist das Abzweigrohr 12 innerhalb des Steckstutzens 23 durch ein Adapterrohr **26** aus Kunststoff oder Metall verlängert, das am freien Ende ein Schraubgewinde oder einen Schweißstutzen **27** aufweist. Über eine Rohrschelle **28** ist das Adapterrohr 26 am Rohranschluss 23 gehalten.

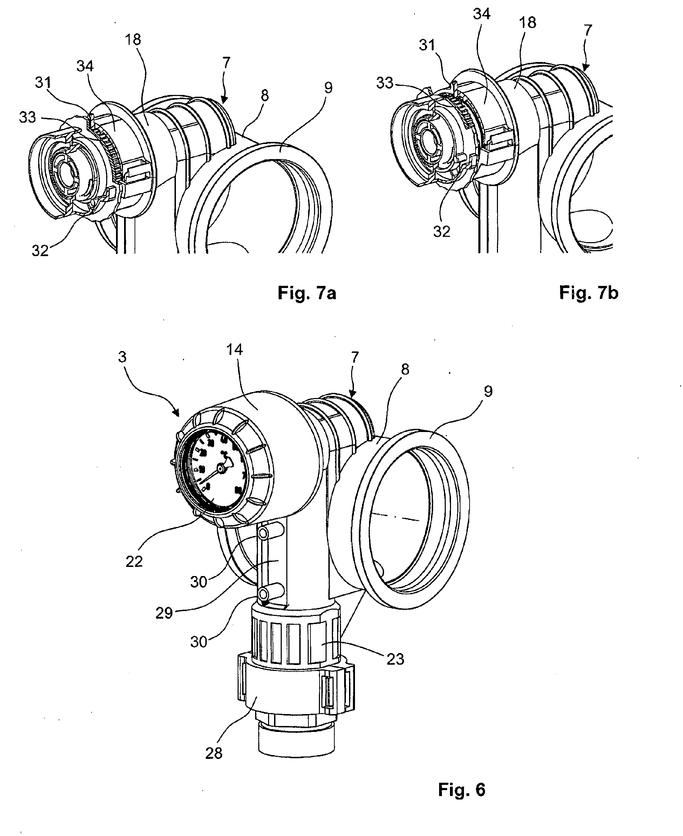

In Fig. 1 sind die Abzweigrohre 12 des oberen Sole-Verteilers 1 als integrale Roherstücke des Modulgehäuses 7 und die Abzweigrohre 12 des unteren Sole-Verteilers 1 als separate Rohreinsätze mit Durchflussmesser ausgeführt. Im letzteren Fall ist das Adapterrohr 26 in das Abzweigrohr 12 eingesteckt und daran über eine Rohrschelle 28 gehalten. Wie in **Fig. 6** gezeigt, kann der separate Rohreinsatz 12 alternativ auch als Messblende **29** mit zwei Messanschlüssen **30** für einen hydraulischen Abgleich ausgebildet sein.

Wie in **Fign. 7a, 7b** gezeigt, ist außen auf dem Ventilstutzen 18 ein Anschlagring **31** zwischen einer vorderen Endlage (Fig. 7a) und einer hinteren Endlage (Fig. 7b) verschiebbar geführt. der mit einem Drehanschlag **32** die Drehung des Hohlzylinders 20 begrenzt. Der Anschlagring 31 ist in seiner hinteren Endlage auf dem Ventilstutzen 18 frei verdrehbar, um so den Drehanschlag 32 in die gewünschte Anschlagposition zu verdrehen, und in seiner vorderen Endlage auf einem Zahnkranz **33** des Ventilstutzens 18 drehfixiert, um so die eingestellte Anschlagposition zu fixieren. Auf dem Ventilstutzen 18 ist auch ein zweiteiliger Befestigungsring **34** befestigt, der den Hohlzylinder 20 im Ventilstutzen 18 sichert.

Anstelle der in den Figuren gezeigten Rohrschellen können benachbarte Module auch auf andere bekannte Weise miteinander verbunden sein, z.B. über eine Gewindeverbindung.

## Patentansprüche

1. Flüssigkeitsverteiler (1), insbesondere Sole-Verteiler für Geothermieanlagen, mit mehreren in Reihe hintereinander angeordneten, jeweils miteinander lösbar verbundenen Modulen (2, 3), die miteinander eine durchgehende Hauptleitung ausbilden und die ein Anschlussmodul (2) zum Anschließen an einen Verteilerzulauf oder -ablauf und ein oder mehrere Verteilermodule (3) umfassen, und
mit Verbindungsmitteln (10) zum Verbinden von jeweils zwei aneinander anliegenden, kreisringförmigen Anschlussflanschen (9) zweier benachbarter Module (2, 3),
wobei jedes Verteilermodul (3)
ein Verteilermodulgehäuse (7) aus Kunststoff umfasst, mit einem Hauptleitungsabschnitt (8), der an seinen beiden Enden jeweils von einem Anschlussflansch (9) umgeben ist, mit einem rohrförmigen Ventilstutzen (18), der vom Hauptleitungsabschnitt (8) mantelseitig abgeht und eine Seitenöffnung (19) aufweist, und mit einem sich an die Seitenöffnung (19) des Ventilstutzens (18) anschließenden außenseitigen Abzweigrohr (12) oder einem außenseitigen Steckstutzen (23) für ein Abzweigrohr (12), und **dadurch gekennzeichnet, daß** jedes Verteilermodul
ein Ventil (13) umfasst, mit einem von außen in den Ventilstutzen (18) eingesetzten, darin drehbar gelagerten Ventilkörper in Form eines zum Hauptleitungsabschnitt (8) hin offenen Hohlzylinders (20), der mantelseitig eine Ventilöffnung (21) zum Verschließen oder Freigeben der Seitenöffnung (19) des Ventilstutzens (18) aufweist.

2. Flüssigkeitsverteiler nach Anspruch 1, **dadurch gekennzeichnet, dass** zwei benachbarte Module (2, 3) durch eine in die Hauptleitungsabschnitte (8) eingesetzte Dichthülse (16) abgedichtet sind.

3. Flüssigkeitsverteiler nach Anspruch 1 oder 2, **dadurch gekennzeichnet, dass** die Kopplungsmittel durch Rohrschellen (10) gebildet sind, die jeweils zwei aneinander anliegende Anschlussflansche (9) zweier benachbarter Module gegeneinander verspannen.

4. Flüssigkeitsverteiler nach Anspruch 3, **dadurch gekennzeichnet, dass** die Rohrschelle (10) zwei Schellenhälften (10a, 10b) aufweist, von denen die eine Schellenhälfte (10b) als Wandhalter ausgebildet ist.

5. Flüssigkeitsverteiler nach einem der vorhergehenden Ansprüche, **dadurch gekennzeichnet, dass** zwei Verteilermodule (3) über ein Distanzmodul (15) aus Kunststoff, das einen Hauptleitungsabschnitt mit zwei endseitig vorgesehenen kreisringförmigen Anschlussflanschen (9) aufweist, miteinander verbunden sind.

6. Flüssigkeitsverteiler nach einem der vorhergehenden Ansprüche, **dadurch gekennzeichnet, dass** zwei Verteilermodule (3) über ein Winkelmodul (17) aus Kunststoff, das einen Hauptleitungsabschnitt mit zwei endseitig vorgesehenen kreisringförmigen Anschlussflanschen (9) aufweist, miteinander verbunden sind.

7. Flüssigkeitsverteiler nach einem der vorhergehenden Ansprüche, **dadurch gekennzeichnet, dass** das in den Steckstutzen (23) eingesetzte Abzweigrohr (12) als ein Durchflussmesser oder als eine Messblende (29) mit zwei Messanschlüssen (30) für einen hydraulischer Abgleich ausgebildet ist.

8. Flüssigkeitsverteiler nach einem der vorhergehenden Ansprüche, **dadurch gekennzeichnet, dass** das Ventil (13) ein Handrad (14) zum Drehen des Hohlzylinders (20) aufweist.

9. Flüssigkeitsverteiler nach Anspruch 8, **dadurch gekennzeichnet, dass** in das Handrad (14) des Ventils (13) ein Thermometer (22) eingebaut ist.

10. Flüssigkeitsverteiler nach einem der vorhergehenden Ansprüche, **dadurch gekennzeichnet, dass** auf dem Ventilstutzen (18) ein die Drehung des Hohlzylinders (20) begrenzender Anschlagring (31) zwischen einer ersten Stellung, in der er auf dem Ventilstutzen (18) drehfixiert ist, und einer zweiten Stellung, in der er auf dem Ventilstutzen (18) verdrehbar ist, verschiebbar geführt ist.

11. Flüssigkeitsverteiler nach einem der vorhergehenden Ansprüche, **dadurch gekennzeichnet, dass** das Anschlussmodul (2) mit Armaturen (6a-6c), insbesondere zur Befüllung, Druckanzeige, Entlüftung oder Spülung, versehen ist.

12. Verteilermodul (3) für einen Flüssigkeitsverteiler nach einem der vorhergehenden Ansprüche, wobei der Verteilermodul (3) aufweist:
ein Verteilermodulgehäuse (7) aus Kunststoff mit einem Hauptleitungsabschnitt (8), der an seinen beiden Enden jeweils von einem kreisringförmigen Anschlussflansch (9) umgeben ist, mit einem rohrförmigen Ventilstutzen (18), der vom Hauptleitungsabschnitt (8) mantelseitig abgeht und eine Seitenöffnung (19) aufweist, und mit einem sich an die Seitenöffnung (19) des Ventilstutzens anschließenden außenseitigen Abzweigrohr (12) oder einem außenseitigen Steckstutzen (23) für ein Abzweigrohr (12), und
ein Ventil (13) mit einem von außen in den Ventilstutzen (18) eingesetzten, darin drehbar gelagerten Ventilkörper in Form eines zum Hauptleitungsabschnitt (8) hin offenen Hohlzylinders (20), der mantelseitig eine Ventilöffnung (21) zum Verschließen oder Freigeben der Seitenöffnung (19) des Ventilstutzens (18) aufweist.

## Claims

1. Liquid distributor (1), in particular brine distributor for geothermal plants, comprising
several modules (2, 3), which are detachably connected to each other, are arranged in series behind one another, form together a continuous main line and comprise a connector module (2) for connection to a distributor supply line or distributor return line and one or more distributor modules (3), and connecting means (10) for connecting two abutting circular connector flanges (9) of two neighboring modules (2, 3),
each distributor module (3) comprising
a distributor module housing (7) of plastic material, comprising a main line section (8), each end of which is surrounded by one connector flange (9), a pipe-shaped valve stem (18) which branches off from the lateral surface side of the main line section (8) and has a side opening (19), and a branch pipe (12) that joins the side opening (19) of the valve stem (18) or a plug connector (23) provided on the outside for a branch pipe (12),
**characterized in that** each distributor module comprises a valve (13) with a valve body in the form of a hollow cylinder (20) which is open towards the main line section (8), is inserted from the outside into the valve stem (18), is disposed therein in a rotatable manner and has on its lateral surface a valve opening (21) for closing or opening the side opening (19) of the valve stem (18).

2. Liquid distributor according to claim 1, **characterized in that** two neighboring modules (2, 3) are sealed by a sealing sleeve (16) which is inserted into the main line sections (8).

3. Liquid distributor according to claim 1 or 2, **characterized in that** the coupling means are formed by pipe clamps (10), each pipe clamp clamping two abutting connector flanges (9) of two neighboring modules against each other.

4. Liquid distributor according to claim 3, **characterized in that** the pipe clamp (10) has two clamp halves (10a, 10b), one clamp half (10b) of which is formed as a wall holder.

5. Liquid distributor according to any one of the preceding claims, **characterized in that** two distributor modules (3) are connected to each other via a distance module (15) of plastic material having a main line section with two circular connector flanges (9) provided at the ends.

6. Liquid distributor according to any one of the preceding claims, **characterized in that** two distributor modules (3) are connected to each other via an angle module (17) of plastic material having a main line section with two circular connector flanges (9) provided at the ends.

7. Liquid distributor according to any one of the preceding claims, **characterized in that** the branch pipe (12) that is inserted into the plug connector (23) is designed as a flow meter or an orifice plate (29) with two measurement connections (30) for hydraulic balance.

8. Liquid distributor according to any one of the preceding claims, **characterized in that** the valve (13) comprises a handwheel (14) for rotating the hollow cylinder (20).

9. Liquid distributor according to claim 8, **characterized in that** a thermometer (22) is installed in the handwheel (14) of the valve (13).

10. Liquid distributor according to any one of the preceding claims, **characterized in that** a stop ring (31), which limits rotation of the hollow cylinder (20), is guided on the valve stem (18) such that it can be displaced between a first position, in which it is non-rotationally fixed on the valve stem (18), and a second position, in which it can be rotated on the valve stem (18).

11. Liquid distributor according to any one of the preceding claims, **characterized in that** the connector module (2) is provided with fittings (6a-6c), in particular for filling, pressure indication, deaeration or rinsing.

12. Distributor module (3) for a liquid distributor according to any one of the preceding claims, wherein the distributor module (3) comprises:
a distributor module housing (7) of plastic material comprising a main line section (8), each end of which is surrounded by one circular connector flange (9), a pipe-shaped valve stem (18) which branches off from the lateral surface side of the main line section (8) and has a side opening (19), and a branch pipe (12) that joins the side opening (19) of the valve stem or a plug connector (23) provided on the outside for a branch pipe (12), and
a valve (13) with a valve body in the form of a hollow cylinder (20) which is open towards the main line section (8), is inserted from the outside into the valve stem (18), is disposed therein in a rotatable manner and has on its lateral surface a valve opening (21) for closing or opening the side opening (19) of the valve stem (18).

## Revendications

1. Distributeur de liquide (1), en particulier distributeur de saumure pour installations géothermiques, comportant plusieurs modules (2, 3) disposés en série, chaque fois reliés entre eux de manière détachable, qui forment ensemble une conduite principale continue et qui comprennent un module de raccordement (2) pour le raccordement à une entrée ou une sortie de distributeur et un ou plusieurs modules distributeurs (3), et
comportant des moyens de liaison (10) pour relier chaque fois deux brides de raccordement annulaires (9) appliquées l'une contre l'autre de deux modules (2, 3) adjacents,
dans lequel chaque module distributeur (3) comprend un boîtier de module distributeur (7) en matière plastique avec un tronçon de conduite principale (8) qui est entouré à chacune de ses deux extrémités par une bride de raccordement (9), avec un raccord de vanne tubulaire (18) qui part du tronçon de conduite principale (8) côté enveloppe et présente une ouverture latérale (19), et avec un tuyau de dérivation (12) extérieur se raccordant à l'ouverture latérale (19) du raccord de vanne (18) ou un raccord d'enfichage extérieur (23) pour un tuyau de dérivation (12),
**caractérisé en ce que** chaque module distributeur comprend une vanne (13) avec un corps de vanne inséré de l'extérieur dans le raccord de vanne (18) et monté tournant dans celui-ci sous la forme d'un cylindre creux (20) ouvert vers le tronçon de conduite principale (8), qui présente côté enveloppe une ouverture de vanne (21) permettant de fermer ou dégager l'ouverture latérale (19) du raccord de vanne (18).

2. Distributeur de liquide selon la revendication 1, **caractérisé en ce que** deux modules (2, 3) adjacents sont rendus étanches par un manchon d'étanchéité (16) inséré dans les tronçons de conduite principale (8).

3. Distributeur de liquide selon la revendication 1 ou 2, **caractérisé en ce que** les moyens d'accouplement sont formés par des colliers de serrage (10) qui serrent l'une contre l'autre deux brides de raccordement (9) appliquées l'une contre l'autre de deux modules adjacents.

4. Distributeur de liquide selon la revendication 3, **caractérisé en ce que** le collier de serrage (10) présente deux moitiés de collier (10a, 10b) dont une moitié de collier (lOb) est réalisée sous la forme d'un support mural.

5. Distributeur de liquide selon une des revendications précédentes, **caractérisé en ce que** deux modules distributeurs (3) sont reliés ensemble par un module de distance (15) en matière plastique qui présente un tronçon de conduite principale avec deux brides de raccordement annulaires (9) prévues aux extrémités.

6. Distributeur de liquide selon une des revendications précédentes, **caractérisé en ce que** deux modules distributeurs (3) sont reliés ensemble par un module d'angle (17) en matière plastique qui présente un tronçon de conduite principale avec deux brides de raccordement annulaires (9) prévues aux extrémités.

7. Distributeur de liquide selon une des revendications précédentes, **caractérisé en ce que** le tuyau de dérivation (12) inséré dans le raccord d'enfichage (23) est réalisé sous la forme d'un débitmètre ou d'un diaphragme de mesure (29) avec deux raccords de mesure (30) pour un équilibrage hydraulique..

8. Distributeur de liquide selon une des revendications précédentes, **caractérisé en ce que** la vanne (13) présente un volant (14) pour tourner le cylindre creux (20).

9. Distributeur de liquide selon la revendication 8, **caractérisé en ce qu'**un thermomètre (22) est intégré dans le volant (14) de la vanne (13).

10. Distributeur de liquide selon une des revendications précédentes, **caractérisé en ce qu'**une bague de butée (31) limitant la rotation du cylindre creux (20) est guidée de manière coulissante sur le raccord de vanne (18) entre une première position dans laquelle elle est bloquée en rotation sur le raccord de vanne (18) et une deuxième position dans laquelle elle peut tourner sur le raccord de vanne (18).

11. Distributeur de liquide selon une des revendications précédentes, **caractérisé en ce que** le module de raccordement (2) est pourvu d'éléments de robinetterie (6a-6c), en particulier pour le remplissage, l'affichage de pression, la purge ou le rinçage.

12. Module distributeur (3) pour un distributeur de liquide selon une des revendications précédentes, lequel inodule distributeur (3) présente :
un boîtier de module distributeur (7) en matière plastique avec un tronçon de conduite principale (8) qui est entouré à chacune de ses deux extrémités par une bride de raccordement annulaire (9), avec un raccord de vanne tubulaire (18) qui part du tronçon de conduite principale (8) côté enveloppe et présente une ouverture latérale (19), et avec un tuyau de dérivation (12) extérieur se raccordant à l'ouverture latérale (19) du raccord de vanne ou un raccord d'enfichage extérieur (23) pour un tuyau de dérivation (12), et
une vanne (13) avec un corps de vanne inséré de l'extérieur dans le raccord de vanne (18) et monté tournant dans celui-ci sous la forme d'un cylindre creux (20) ouvert vers le tronçon de conduite principale (8), qui présente côté enveloppe une ouverture de vanne (21) permettant de fermer ou dégager l'ouverture latérale (19) du raccord de vanne (18).
